# EUROPÄISCHE PATENTSCHRIFT

(11) **EP 3 516 366 B1**
(45) Veröffentlichungstag und Bekanntmachung des Hinweises auf die Patenterteilung: **04.03.2020**
(21) Anmeldenummer: 17780647.8
(22) Anmeldetag: 20.09.2017
(51) Int. Cl.: G01N 1/22

(54) **GASENTNAHMESONDE MIT EINER LEITUNG ZUM LEITEN EINES REINIGUNGSMITTELS**
GAS-SAMPLING PROBE HAVING A LINE FOR CARRYING A CLEANING AGENT
SONDE DE PRÉLÈVEMENT DE GAZ COMPORTANT UNE CONDUITE POUR CONDUIRE UN PRODUIT DE NETTOYAGE

(30) Priorität: 23.09.2016 DE 102016218400
(43) Veröffentlichungstag der Anmeldung: 31.07.2019
(73) Patentinhaber: thyssenkrupp Industrial Solutions AG, 45143 Essen (DE); thyssenkrupp AG, 45143 Essen (DE)
(72) Erfinder: BERNDZEN, Benjamin, 48291 Telgte (DE); KÖNNING, Ludwig, 59227 Ahlen (DE); BREDEMEIER, Heinz, 48336 Sassenberg (DE); STREFFING, Michael, 59510 Lippetal (DE)
(74) Vertreter: thyssenkrupp Intellectual Property GmbH
(86) Internationale Anmeldenummer: PCT/EP2017/073707
(87) Internationale Veröffentlichungsnummer: WO 2018/054936

(56) Entgegenhaltungen:
- EP-A1- 1 371 976
- WO-A1-95/28628
- CN-Y- 200 998 630
- DE-B3-102015 122 251

## Beschreibung

Die Erfindung betrifft eine Gasentnahmesonde zur Entnahme von Gasproben aus einem heißen Reaktionsraum mit einer Leitung zum Leiten eines Reinigungsmittels.

Gasentnahmesonden werden verwendet, um Gasproben aus einem heißen Reaktionsraum, wie beispielsweise einem Vorwärmer, Calcinator, Drehofen oder Kühler einer Zementanlage oder einem Wärmetauscher oder Ofensystem für die Behandlung von Erzen und Gesteinen zu entnehmen. Das mittels der Gasentnahmesonde entnommene Gas wird anschließend beispielsweise hinsichtlich des Schadstoffgehalts analysiert. Um eine für die Analyse angemessene Temperatur des Gases zu erhalten, wird die Gasprobe üblicherweise innerhalb der Gasentnahmesonde gekühlt.

Solche Gasentnahmesonden sind beispielsweise aus der DE 103 15 996, der DE 34 40 729 A1, der EP 1 371 976 A1, der WO 95/28628 A1 oder der WO 2015/024625A1 bekannt. Die Gasentnahmesonde wird üblicherweise in der Wandung eines Reaktionsraums positioniert, wobei ein zu analysierendes Gas im Bereich eines vorderen Endes der Gasentnahmesonde aus dem Reaktionsraum entnommen und in einem Gasentnahmerohr bis zu einem hinteren Ende der Gasentnahmesonde geführt und dabei gekühlt wird. Das vordere Ende des Gasentnahmerohrs ist in dem Reaktionsraum positioniert, sodass der Gasstrom des Reaktionsraums an der Gasentnahmesonde vorbei strömt. In dem Gasstrom des Reaktionsraums befinden sich Partikel, wie beispielsweise Zementklinkerstäube, oder Zementklinkerkörner, die sich an das vordere Ende der Gasentnahmesonde ansetzen. Diese Ansatzbildung führt beispielsweise zur Verengung oder Verstopfung des Gaseinlasses der Gasentnahmesonde.

Davon ausgehend ist es Aufgabe der vorliegenden Erfindung, eine Gasentnahmesonde bereitzustellen, die derart ausgebildet ist, dass eine Ansatzbildung zuverlässig entfernt wird. Diese Aufgabe wird erfindungsgemäß durch eine Gasentnahmesonde mit den Merkmalen des unabhängigen Vorrichtungsanspruchs 1 und durch ein Verfahren mit dem nebengeordneten Verfahrensanspruch 14 gelöst. Vorteilhafte Weiterbildungen ergeben sich aus den abhängigen Ansprüchen.

Eine Gasentnahmesonde zur Entnahme von Gasproben aus einem heißen Reaktionsraum umfasst nach einem ersten Aspekt einen Gaseinlass zum Einlassen von Gasproben an einem ersten Endbereich der Gasentnahmesonde und einen Gasauslass an einem zweiten Endbereich der Gasentnahmesonde zum Auslassen von Gasproben aus der Gasentnahmesonde, einen den Gaseinlass umfassenden Sondenkopf, einen den Gasauslass umfassenden Sondenkörper und ein Gasentnahmerohr, das sich von dem Gaseinlass zu dem Gasauslass erstreckt,
wobei das Gasentnahmerohr von einer Kühleinrichtung zur Kühlung des Gasentnahmerohrs umgeben ist. Die Gasentnahmesonde weist des Weiteren zumindest eine Leitung zum Leiten eines Reinigungsmittels auf. Der Sondenkopf weist zumindest einen Auslasskanal zum Auslassen des Reinigungsmittels an dem ersten Endbereich der Gasentnahmesonde auf, wobei sich der zumindest eine Auslasskanal innerhalb des Sondenkopfes zumindest teilweise radial einwärts in Richtung des Gaseinlasses erstreckt.

Die Gasentnahmesonde ist vorzugsweise im Wesentlichen rohrförmig ausgebildet, wobei der Sondenkörper und der Sondenkopf im Wesentlichen den gleichen Durchmesser aufweisen. Der Gaseinlass der Gasentnahmesonde ist vorzugsweise innerhalb des Reaktionsraums angeordnet, wobei der Gasauslass der Gasentnahmesode außerhalb des Reaktionsraums angeordnet ist. Die Kühleinrichtung ist vorzugsweise in dem Sondenkörper und dem sich daran anschließenden Sondenkopf angeordnet. Der Sondenkopf ist insbesondere innerhalb des Reaktionsraums angeordnet und mit dem Sondenkörper fest verbunden. Der Sondenkörper und oder der Sondenkopf sind vorzugsweise zumindest teilweise innerhalb einer Wandung des Reaktionsraums angeordnet.

Bei der Leitung handelt es sich beispielweise um eine rohrförmige Leitung mit einem kreisförmigen Durchmesser, die einen Einlass zum Einlassen des Reinigungsmittels und einen Auslass zum Auslassen des Reinigungsmittels aufweist. Das Reinigungsmittel umfasst insbesondere Luft, Stickstoff oder andere Inertgase, die mit einem Druck beaufschlagt sind und in der Leitung zum Sondenkopf geleitet werden. Vorzugsweise ist das Reinigungsmittel mit einem Druck von etwa 6 - 10 bar, insbesondere 5 -20 bar beaufschlagt. Beispielsweise ist die Leitung eine Druckluftleitung. Die Leitung ist insbesondere derart in der Gasentnahmesonde angeordnet, dass sie Reinigungsmittel an die Oberfläche des Sondenkopfes leitet.

Das Reinigungsmittel dient der Reinigung des Sondenkopfes, insbesondere des Bereiches des Sondenkopfes, der sich in das Innere des Reaktionsraums erstreckt, von Ablagerungen, wie beispielsweise Zementklinkerstäube, oder Zementklinkerkörner, die sich an dem Sondenkopf ansetzen.

Eine Gasentnahmesonde mit einer solchen Leitung, in der ein Reinigungsmittel geleitet wird, ermöglicht eine einfache und zuverlässige Reinigung der Gasentnahmesonde, insbesondere des Sondenkopfes. Eine externe Reinigungsvorrichtung zur Reinigung von Ablagerungen an dem Sondenkopf ist nicht erforderlich. Auch verhindert eine solche Leitung in der Gasentnahmesonde, dass die Gasentnahmesonde zur Reinigung aus dem Reaktionsraum oder der Wandung des Reaktionsraums entfernt werden muss und minimiert somit den zur Reinigung erforderlichen Aufwand.

Gemäß einer ersten Ausführungsform ist die Leitung zumindest teilweise in dem Sondenkopf angeordnet. Im Betrieb der Gasentnahmesonde ist der Sondenkopf innerhalb des Reaktionsraums angeordnet, aus dem die Gasproben zu entnehmen sind. Ablagerungen treten daher hauptsächlich oder ausschließlich an dem Sondenkopf, insbesondere an der in den Reaktionsraum weisenden Oberfläche auf. Eine Anordnung der Leitung zum Leiten des Reinigungsmittels in dem Sondenkopf ermöglicht daher eine zuverlässige Reinigung des Sondenkopfes von Ablagerungen.

In dem Sondenkopf ist zumindest ein Auslasskanal zum Auslassen des Reinigungsmittels an dem ersten Endbereich der Gasentnahmesonde angeordnet. Der Auslasskanal ist insbesondere derart in dem Sondenkopf angeordnet, dass er in Richtung des Gaseinlasses der Gasentnahmesonde weist, sodass Reinigungsmittel durch den Auslasskanal in Richtung des Gaseinlasses strömt. Das Reinigungsmittel wird so zuverlässig an den verunreinigten ersten Endbereich der Gasentnahmesonde geleitet und insbesondere werden die Ablagerungen an dem Gaseinlass der Gasentnahmesonde durch das Reinigungsmittel entfernt.

Die Leitung erstreckt sich gemäß einer weiteren Ausführungsform durch den Sondenkörper und den Sondenkopf. Der Einlass des Reinigungsmittels in die Leitung ist vorzugsweise in dem Sondenkörper, insbesondere außerhalb des Reaktionsraums, und der Auslass des Reinigungsmittels aus der Leitung ist vorzugsweise in dem Sondenkörper angeordnet. Dies ermöglicht eine Zufuhr des Reinigungsmittels in die Gasentnahmesonde außerhalb des Reaktionsraums, in dem vergleichsweise hohe Temperaturen auftreten.

Gemäß einer weiteren Ausführungsform ist die Leitung als Ringraum ausgebildet und konzentrisch um das Gasentnahmerohr angeordnet. Dies ermöglicht eine Reinigung des Sondenkopfes umfangsmäßig um den Gaseinlass herum.

Gemäß einer weiteren Ausführungsform sind eine Mehrzahl von Leitungen in radialer Richtung bezogen auf die Gasentnahmesonde außerhalb des Gasentnahmerohrs angeordnet.

In dem Sondenkopf sind gemäß einer weiteren Ausführungsform eine Mehrzahl von Auslasskanälen angeordnet, die jeweils mit zumindest einer Leitung in Verbindung stehen. Dies ermöglicht eine gezielte Leitung von Reinigungsmittel zu einem der Auslasskanäle, sodass Ablagerungen an beispielsweise stärker betroffenen Bereichen gezielt entfernt werden.

Der zumindest eine Auslasskanal erstreckt sich innerhalb des Sondenkopfes zumindest teilweise radial einwärts in Richtung des Gaseinlasses.

Gemäß einer weiteren Ausführungsform ist die Leitung und/ oder der zumindest eine Auslasskanal als Ringraum ausgebildet. Der Übergang zwischen der Leitung und dem zumindest einen Auslasskanal ist gemäß einer weiteren Ausführungsform kantenfrei, insbesondere stetig ausgebildet. Eine solche stetige und kantenfreie Ausbildung ist vorzugsweise mittels eines generativen Fertigungsverfahrens möglich, sodass innerhalb der Leitung und dem Auslasskanal keine oder nur sehr geringe Verwirbelungen auftreten.

Der Sondenkopf ist gemäß einer weiteren Ausführungsform mittels eines generativen Fertigungsverfahrens, insbesondere selektives Laserschmelzen oder Elektronenstrahlschmelzen, hergestellt. Dies ermöglicht die Herstellung des Sondenkopfes in einer vergleichsweise freien Geometrie, die nicht durch die üblichen Herstellungsverfahren, wie Gießen oder spanendes Bearbeiten begrenzt ist.

Gemäß einer weiteren Ausführungsform weist der Sondenkopf auf seiner Oberfläche eine Verschleißschutzeinrichtung, insbesondere aus einem Hartmetall, auf. Die Verschleißschutzeinrichtung umfasst beispielsweise ein Hartmetall wie Wolframcarbide oder hoch chromhaltige Legierungen und wird mit dem Sondenkopf und vorzugsweise dem Endbereich des Sondenkörpers stoffschlüssig, insbesondere durch Schweißen, Löten oder Kleben verbunden. Beispielsweise wird die Verschleißschutzeinrichtung auf den Sondenkopf gepresst. Beispielsweise umfasst die Verschleißschutzanordnung eine Auftragsschweißung aus einem der genannten Materialien.

Der Sondenkopf ist gemäß einer weiteren Ausführungsform mit dem Sondenkörper stoffschlüssig verbunden, insbesondere verschweißt. Die Schweißverbindung ist insbesondere außerhalb des Reaktionsraums angeordnet. Vorzugsweise umfasst die Schweißverbindung eine Mikroschweißverbindung. Bei den Mikroverschweißungen handelt es sich um Schweißverbindungen zwischen dem Sondenkörper und dem Sondenkopf, die durch die Herstellung des Sondenkopfes mittels eines generativen Fertigungsverfahrens, insbesondere selektives Laserschmelzen oder Elektronenstrahlschmelzen, entstehen. Dabei wird der Sondenkopf auf dem den Verbindungsbereich aufweisenden Endbereich des Sondenkörpers mittels des generativen Fertigungsverfahrens aufgebaut. Der zu verarbeitende Werkstoff, insbesondere Metall, wird in Pulverform in einer dünnen Schicht auf den Endbereich des Sondenkörpers aufgebracht und mittels Laserstrahlung vollständig geschmolzen. Nach der Erstarrung bildet der Werkstoff mit dem Endbereich des Sondenkörpers eine Mikroverschweißung. Die durch die generative Fertigung des Sondenkopfes entstehenden Mikroverschweißungen des Sondenkopfes mit dem Sondenkörper weisen eine hohe Temperaturbeständigkeit von etwa 1300°C auf, sodass beispielsweise eine Anordnung der Mikroschweißverbindung innerhalb des Reaktionsraums möglich ist.

Gemäß einer weiteren Ausführungsform weist die Gasentnahmesonde eine Kühleinrichtung mit einer Mehrzahl von Kühlkanälen auf, die um das Gasentnahmerohr herum angeordnet sind und über einen Überströmbereich in dem Sondenkopf miteinander in Fluidverbindung stehen. Die Kühleinrichtung umfasst beispielsweise einen ersten Kühlkanal und einen mit dem ersten Kühlkanal verbundenen zweiten Kühlkanal, in denen ein Kühlmittel, wie beispielsweise Luft oder Wasser strömt. Der erste Kühlkanal ist vorzugsweise ein Zulauf und der zweite Kühlkanal ein Rücklauf des Kühlmittels. Die Kühleinrichtung weist insbesondere einen Kühlmittelkreis auf, wobei das Kühlmittel über einen Kühlmitteleinlass in den ersten Kühlkanal strömt und den zweiten Kühlkanal über einen Kühlmittelauslass verlässt.

Die Kühlkanäle sind insbesondere in dem Sondenkörper durch eine Trennwand voneinander getrennt. In einem Überströmbereich innerhalb des Sondenkopfes ist der erste Kühlkanal mit dem zweiten Kühlkanal verbunden, sodass Kühlmittel von dem ersten Kühlkanal in den zweiten Kühlkanal strömt. Der erste und der zweite Kühlkanal sind insbesondere halbringförmig ausgebildet, sodass sie zusammen einen geschlossenen Ring ausbilden, der konzentrisch um das Gasentnahmerohr angeordnet ist.

Der Überströmbereich weist vorzugsweise eine Mehrzahl von Überströmkanälen auf. Die Überströmkanäle erstrecken sich insbesondere innerhalb des Sondenkopfes in einem Bereich nahe der Oberfläche, sodass eine effektive Kühlung der Oberfläche erreicht wird.

Die Erfindung umfasst des Weiteren ein Verfahren zum Betreiben einer Gasentnahmesonde gemäß einem der vorangehenden Ansprüche, wobei ein Reinigungsmittel durch die Leitung zum Sondenkopf der Gasentnahmesonde geleitet wird, sodass Ablagerungen an dem Sondenkopf entfernt werden.

Die mit Bezug auf die Gasentnahmesonde beschriebenen Vorteile und Ausführungen treffen in verfahrensmäßiger Entsprechung auf das Verfahren zum Betreiben einer solchen Gasentnahmesonde zu. Die voran beschriebene Gasentnahmesonde wird insbesondere mittels eines generativen Fertigungsverfahrens hergestellt.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung einer Gasentnahmesonde in einer Wandung eines Reaktionsraums in einer Schnittdarstellung gemäß einem Ausführungsbeispiel.
- Fig. 2: zeigt eine schematische Darstellung eines Ausschnitts einer Gasentnahmesonde in einer Wandung eines Reaktionsraums in einer Schnittdarstellung gemäß einem weiteren Ausführungsbeispiel.
- Fig. 3: zeigt eine schematische Darstellung eines Ausschnitts einer Gasentnahmesonde in einer Wandung eines Reaktionsraums in einer Schnittdarstellung gemäß einem weiteren Ausführungsbeispiel.

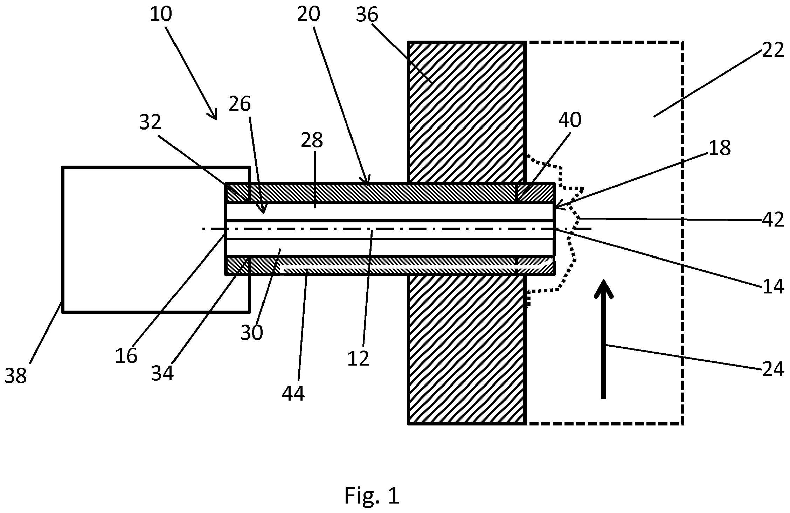

In Fig. 1 ist eine Gasentnahmesonde 10 schematisch dargestellt. Die Gasentnahmesonde 10 ist im Wesentlichen rohrförmig ausgebildet und in einer Wandung 36 eines Reaktionsraums 22 angeordnet. Bei dem Reaktionsraum 22 handelt es sich beispielsweise um einen Calcinator einer Zementanlage, in dem eine Entsäuerung des Rohmehls erfolgt. Beispielhaft ist innerhalb des Reaktionsraums 22 ein Gasstrom 24 dargestellt, der in Pfeilrichtung strömt. Die Gasentnahmesonde 10 erstreckt sich durch die Wandung hindurch und ist mit einem ersten Endbereich innerhalb des Reaktionsraums 22 und mit einem zweiten Endbereich außerhalb des Reaktionsraums 22 angeordnet. Die Gasentnahmesonde 10 umfasst einen Sondenkopf 18, der den ersten Endbereich der Gasentnahmesonde 10 umfasst und zumindest teilweise innerhalb des Reaktionsraums 22 angeordnet ist. In dem Ausführungsbeispiel der Fig. 1 erstreckt sich der Sondenkopf 18 mit etwa drei Viertel seiner Länge in den Prozessraum 22 hinein, wobei etwa ein Viertel der Länge des Sondenkopfes 18 innerhalb der Wandung 36 des Reaktionsraums 22 angeordnet ist. Die Gasentnahmesonde 10 umfasst des Weiteren einen Sondenkörper 20, der sich in Längsrichtung der Gasentnahmesonde 10 an den Sondenkopf 18 anschließt und durch die Wandung 36 verläuft, sodass dieser an dem dem Reaktionsraum 22 abgewandten Ende aus der Wandung 36 hervorsteht. Der Sondenkopf 18 und der Sondenkörper 20 sind miteinander über einen Verbindungsbereich 40 verbunden, wobei der Verbindungsbereich 40 beispielsweise eine Schweißnaht oder Mikroverschweißungen umfasst. Der Verbindungsbereich 40 ist vorzugsweise in einem Bereich der Gasentnahmesonde 10 angeordnet, der sich innerhalb der Wandung 36 des Reaktionsraums 22 befindet.

Die Gasentnahmesonde 10 umfasst einen Gaseinlass 14 zum Einlassen von Gas aus dem Reaktionsraum 22 in die Gasentnahmesonde 20 und einen Gasauslass 16 zum Auslassen des Gases aus dem Gasentnahmerohr 12. Der Gaseinlass 14 ist an dem ersten Endbereich innerhalb des Reaktionsraums 22 angeordnet, wobei der Gasauslass 16 an dem zweiten Endbereich außerhalb des Reaktionsraums 22 angeordnet ist. Ein Gasentnahmerohr 12 erstreckt sich von dem Gaseinlass 14 zu dem Gasauslass 16 und in axialer Richtung mittig durch die Gasentnahmesonde 10. Das Gasentnahmerohr 12 erstreckt sich in axialer Richtung durch den Sondenkörper 20 und den Sondenkopf 18. An dem Gasauslass 16 ist beispielsweise eine nicht dargestellte Analyseeinrichtung zur Analyse des mittels der Gasentnahmesonde 10 entnommenen Gases 24 angeordnet.

Um das Gasentnahmerohr 12 herum ist eine Kühleinrichtung 26 angeordnet. Die Kühleinrichtung 26 dient der Kühlung des Gasentnahmerohrs 12 und des darin strömenden Gases, sodass eine anschließende Analyse der Gaszusammensetzung erleichtert wird. Die Kühleinrichtung 26 umfasst einen ersten Kühlkanal 28 und einen mit dem ersten Kühlkanal 28 verbundenen zweiten Kühlkanal 30, in denen ein Kühlmittel, wie beispielsweise Luft oder Wasser strömt. Die Kühlkanäle 28, 30 sind insbesondere konzentrisch um das Gasentnahmerohr 12 angeordnet, wobei der erste Kühlkanal 28 einen Zulauf und der zweite Kühlkanal 30 einen Rücklauf des Kühlmittels bildet. Die Kühleinrichtung 26 weist einen Kühlmittelkreis 38 auf, wobei das Kühlmittel über einen Kühlmitteleinlass 32 in den ersten Kühlkanal 28 strömt und den zweiten Kühlkanal 30 über einen Kühlmittelauslass 34 verlässt. In Strömungsrichtung von dem Kühlmittelauslass 34 zu dem Kühlmitteleinlass 32 sind beispielsweise in Fig. 1 nicht dargestellte Elemente, wie Kühl- oder Erwärmungseinrichtung oder beispielsweise ein Ventilator oder eine Pumpe angeordnet. Die Kühlkanäle 28, 30 sind insbesondere in dem Sondenkörper 20 durch eine nicht dargestellte Trennwand voneinander getrennt. In einem Bereich innerhalb des Sondenkopfes 18 ist der erste Kühlkanal 28 mit dem zweiten Kühlkanal 30 verbunden, sodass Kühlmittel von dem ersten Kühlkanal 28 in den zweiten Kühlkanal 30 strömt. Der erste und der zweite Kühlkanal 28, 30 sind insbesondere halbringförmig ausgebildet, sodass sie einen geschlossenen Ring ausbilden, der konzentrisch um das Gasentnahmerohr 12 angeordnet ist. In dem Sondenkopf 18 ist ein Überströmbereich ausgebildet, in den Kühlmittel von dem ersten Kühlkanal 28 in den zweiten Kühlkanal strömt.

Die Gasentnahmesonde 10 weist außerdem eine Leitung 44 zum Leiten eines Reinigungsmittels auf, die sich in axialer Richtung durch den Sondenkörper 20 und den Sondenkopf 18 erstreckt. Bei dem Reinigungsmittel handelt es sich beispielsweise um Luft, Stickstoff oder andere Inertgase, das unter einem Druck von etwa 5 - 20 bar, insbesondere 6 - 10 bar in der Leitung 44 geführt wird. Die Leitung 44 ist beispielhaft radial außerhalb der Kühlkanäle 28, 30 angeordnet und weist einen Einlass in dem Sondenkörper 20 auf. An die Leitung 44 schließt sich in dem Sondenkopf ein Auslasskanal an, durch welchen das Reinigungsmittel aus dem Sondenkopf 18 ausgelassen wird.

Im Betrieb der Gasentnahmesonde 10 wird diese in der in Fig. 1 dargestellten Weise in der Wandung 36 des Reaktionsraums 22 positioniert, sodass der Sondenkopf 18 in den Reaktionsraum 22 hinein ragt. Das Gas 24 strömt in Pfeilrichtung durch den Reaktionsraum 22 an dem Sondenkopf 18 entlang, wobei sich Ablagerungen 42, wie in dem Gasstrom mitgeführte Partikel an dem Sondenkopf 18 absetzen. Zum Entfernen der Ablagerungen 42 an dem Sondenkopf 18 wird das Reinigungsmittel, insbesondere Druckluft unter einem Druck von etwa 6 - 10 bar, insbesondere 5 -20 bar durch die Leitung in den Auslasskanal in dem Sondenkopf 18 geführt. Das Reinigungsmittel tritt an dem Sondenkopf 18 aus der Gasentnahmesonde 10 aus und beaufschlagt die Ablagerung 18 mit einem Druckstoß, sodass diese von dem Sondenkopf 18 entfernt wird.

In dem Sondenkopf 18 ist ein Sensor 70 angeordnet, der zur Ermittlung von Betriebsparametern oder eines Verschleißzustandes ausgebildet ist. Bei den Betriebsparametern handelt es sich beispielsweise um die Temperatur, den Druck oder die Dehnung des Materials an der Position des Sensors. Der Sensor 70 ist innerhalb des Sondenkopfes 18 angeordnet. Beispielsweise sind eine Mehrzahl von Sensoren umfangsmäßig zueinander beabstandet in einem stirnseitigen Endbereich des Sondenkopfes 18 angeordnet. Die Sensoren 70 sind beispielsweise derart ausgebildet, dass sie die Temperatur in einem Bereich nahe der Oberfläche des Sondenkopfes 18 ermitteln. Die Sensoren 70 sind jeweils mit nicht dargestellten elektrischen Leitungen verbunden, die beispielsweise der Stromversorgung der Sensoren 70 und/ oder der Übermittlung der mittels der Sensoren 70 ermittelten Daten dienen. Die elektrischen Leitungen sind innerhalb des Sondenkopfes 18 in einem Kanal geführt, der von dem im Sondenkopf 18 angeordneten Sensor 70 in den Sondenkörper 20 in Richtung des zweiten Endbereichs der Gasentnahmesonde 10 verläuft. Es ist ebenfalls denkbar, lediglich einen Sensor 70 in dem Sondenkopf 18 anzuordnen, oder eine Mehrzahl von beispielsweise 3- 10 Sensoren innerhalb des Sondenkopfes zueinander beabstandet anzuordnen. Jeder Sensor 70 ist in einem jeweiligen Hohlraum innerhalb des Sondenkopfes 18 angeordnet. Der Hohlraum weist insbesondere eine Geometrie auf die der Geometrie des Sensors 70 entspricht, sodass der Sensor 70 im Wesentlichen von dem Material des Sondenkopfes 18 vollständig umschlossen ist. Der Sensor 70 ist insbesondere spielfrei in der dem Hohlraum aufgenommen, sodass dieser im Betrieb der Gasentnahmesonde 10 die Position innerhalb des Hohlraums nicht ändert. Der Hohlraum ist im Wesentlichen vollständig von dem Material des Sondenkopfes 18 umgeben.

Bei der Herstellung des Sondenkopfes 18 mittels eines generativen Fertigungsverfahrens werden die Sensoren während des Fertigungsverfahrens in dem Sondenkopf 18 platziert. Bei generativen Fertigungsverfahren, wie selektiven Laserschmelzen wird der zu verarbeitende Werkstoff in Pulverform in einer dünnen Schicht auf einer Grundplatte aufgebracht und mittels Laserstrahlung lokal vollständig umgeschmolzen. Nach der Erstarrung bildet der Werkstoff eine feste Materialschicht. Anschließend wird die Grundplatte um den Betrag einer Schichtdicke abgesenkt und erneut Pulver aufgetragen, wobei dieser Zyklus wiederholt wird, bis alle Schichten umgeschmolzen sind und das Bauteil hergestellt ist. Typische Schichtstärken für beispielsweise metallische Materialien sind 15-150 µm. Während des schichtweisen Aufbaus des Sondenkopfes 18 werden die Sensoren 70 platziert und der Sondenkopf 18 wird um die Sensoren 70 herum aufgebaut. Auch die elektrischen Leitungen werden auf die gleiche Weise in dem Sondenkopf 18 platziert. Die Gasentnahmesonde 10 weist des Weiteren eine nicht dargestellte Auswerteeinrichtung auf, die mit den Sensoren 70 in Verbindung steht. Die Sensoren 70 sind über die elektrischen Leitungen oder Telemetrie mit der Auswerteeinrichtung verbunden, wobei die mittels der Sensoren 70 ermittelten Daten an die Auswerteeinrichtung übermittelt werden. Die Auswerteeinrichtung ermittelt aus den Daten beispielsweise einen Verschleißzustand der Gasentnahmesonde 10, insbesondere des Sondenkopfes 18, die Temperatur des Kühlmittels oder die Temperatur des in dem Reaktionsraum 22 strömenden Gases.

Fig. 1 zeigt auch eine Verschleißschutzeinrichtung 62, die an dem Sondenkopf 18 und dem Sondenkörper 20 angebracht ist. Die Verschleißschutzeinrichtung 62 umschließt den in den Reaktionsraum 22 hinein ragenden Bereich der Gasentnahmesonde 10 vollständig, mit Ausnahme einer mit dem Gaseinlass 14 fluchtenden Öffnung in der Verschleißschutzeinrichtung 62. Die Verschleißschutzeinrichtung 62 erstreckt sich über die gesamte Länge des Sondenkopfes 18 sowie entlang der in Richtung des Reaktionsraums 22 weisenden Stirnfläche des Sondenkopfes 18. Die Verschleißschutzeinrichtung 62 weist die Form einer Zylinderkappe auf mit einem hohlzylindrischen Bereich und einem sich daran anschließenden kreisscheibenförmigen Bereich, wobei der hohlzylindrische Bereich um den äußeren Umfang des Sondenkopfes 18 und zumindest teilweise um den äußeren Umfang des Sondenkörpers 20 angebracht ist. Der Sondenkopf 18 weist einen geringeren Durchmesser als der Sondenkörper 20 auf, der vorzugweise um die Dicke des hohlzylindrischen Bereichs geringer ist als der Durchmesser des Sondenkörpers 20. Der Sondenkörper weist an seinem dem Sondenkopf 18 zugewandten Ende eine Aussparung auf, in der der hohlzylindrische Bereich 68 der Verschleißschutzeinrichtung angeordnet ist. Die Aussparung weist insbesondere eine Tiefe auf, die der Dicke des hohlzylindrischen Bereichs entspricht, sodass die Verschleißschutzeinrichtung 62 fluchtend mit der Oberfläche des Sondenkörpers 20 angeordnet ist. An der Stirnseite des Sondenkopfes 18 ist der kreisscheibenförmige Bereich angebracht, der eine Öffnung aufweist, die mit dem Gaseinlass 14 fluchtet und in etwa einen dem Gaseinlass entsprechenden Durchmesser aufweist.

Die Verschleißschutzeinrichtung 62 umfasst ein Hartmetall wie beispielsweise Wolframcarbide oder hoch chromhaltige Legierungen. Die zylinderkappenförmige Verschleißschutzeinrichtung wird beispielsweise mit dem Sondenkopf 18 und dem Endbereich des Sondenkörpers 20 stoffschlüssig insbesondere durch Schweiße, Löten oder Kleben verbunden. Es ist ebenfalls denkbar, dass die Verschleißschutzeinrichtung 62 auf den Sondenkopf 18 und den Endbereich des Sondenkörpers gepresst wird. Beispielsweise umfasst die Verschleißschutzanordnung eine Auftragsschweißung aus einem der genannten Materialien. Die Verschleißschutzanordnung erstreckt sich über den Verbindungsbereich 40 des Sondenkopfes 18 mit dem Sondenkörper 20.

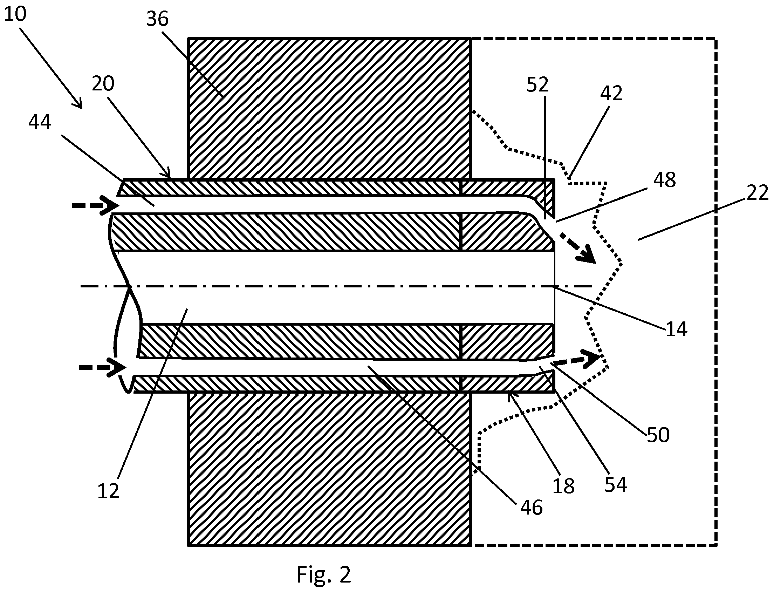

Fig. 2 zeigt ein weiteres Ausführungsbeispiel einer Gasentnahmesonde 10. Die in Fig. 2 dargestellte Gasentnahmesonde 10 entspricht im Wesentlichen der Gasentnahmesonde 10 der Fig. 1, wobei der Einfachheit halber die Kühlkanäle 28, 30 in Fig. 2 nicht dargestellt sind. Fig. 2 zeigt lediglich einen Ausschnitt der Gasentnahmesonde 10, sodass die Leitung und die Auslasskanäle detailliert dargestellt sind. Die Gasentnahmesonde der Fig. 2 weist zwei Leitungen 44, 46 zum Leiten eines Reinigungsmittels auf die um das Gasentnahmerohr 12 herum angeordnet sind. Insbesondere sind die Leitungen 44, 46 räumlich voneinander getrennt in der Gasentnahmesonde 10 angeordnet. Es ist auch denkbar, dass die Gasentnahmesonde 10 leidglich eine Leitung 44 aufweist, die beispielsweise als ein Ringraum konzentrisch um das Gasentnahmerohr 12 ausgebildet ist. Die Leitungen 44, 46 erstrecken sich im Wesentlichen in axialer Richtung entlang des Gasentnahmerohrs 12 durch den Sondenkörper 20 und in den Sondenkopf 18. In dem Sondenkopf 18 schließt sich an die Leitung 44, 46 jeweils zumindest ein Auslasskanal 52, 54 an. Beispielsweise sind eine Mehrzahl von Auslasskanälen 52, 54 konzentrisch um das Gasentnahmerohr angeordnet. Es ist auch denkbar, dass jeder Leitung 44, 46 lediglich ein Auslasskanal 52, 54 zugeordnet ist.

Die Auslasskanäle 52, 54 erstrecken sich von der jeweiligen Leitung 44, 46, hin zu einem Auslass 48, 50 zum Auslassen des Reinigungsmittels in dem Sondenkopf 18. Durch die Auslässe 48, 50 wird Reinigungsmittel aus den Auslasskanälen 52, 54 in den Reaktionsraum 22 ausgelassen. Die Auslasskanäle 52, 54 verlaufen innerhalb des Sondenkopfes 18 mit einer in radialer Richtung einwärts weisenden Komponente, sodass das aus den Auslässen 48, 50 austretende Reinigungsmittel in einem Winkel zur Axialen der Gasentnahmesonde 10 radial einwärts in den Reaktionsraum 22 strömt. Die Auslasskanäle 52, 54 sind beispielsweise jeweils unterschiedlich, insbesondere mit einer unterschiedlichen Neigung zur Axialen der Gasentnahmesonde 10 ausgebildet. Beispielsweise sind die Auslasskanäle 52, 54 bogenförmig ausgebildet. Der Übergang zwischen den Leitungen 44, 46 und den Auslasskanälen 52, 54 ist kantenfrei, insbesondere stetig, ausgebildet, sodass die Ausbildung von Verwirbelungen und Turbulenzen innerhalb der Leitungen 44, 46 und den Auslasskanälen 52, 54 vermieden wird.

Beispielsweise sind an dem Sondenkopf 18 vier bis zehn, insbesondere sechs Auslässe vorzugsweise konzentrisch um den Gaseinlass 14 herum angeordnet. Die Leitungen 44, 46 werden beispielsweise mit Druckstößen beaufschlagt. Vorzugsweise werden die Leitungen 44, 46 synchron oder asynchron mit Druckstößen beaufschlagt.

Der Sondenkopf 18 ist insbesondere mittels eines generativen Fertigungsverfahrens, insbesondere selektives Laserschmelzen oder Elektronenstrahlschmelzen, hergestellt und umfasst ein Metall. Vorzugsweise ist der Sondenkopf 18 ein monolithisches im Wesentlichen einstückiges Bauteil.

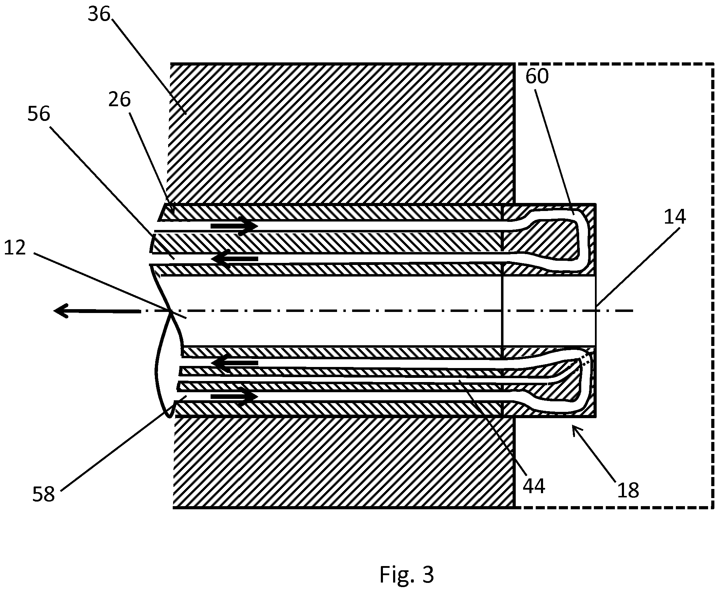

Fig. 3 zeigt ein weiteres Ausführungsbeispiel einer Gasentnahmesonde 10. Die in Fig. 3 dargestellte Gasentnahmesonde 10 entspricht im Wesentlichen der Gasentnahmesonde 10 der Fig. 1 und 2, wobei der Einfachheit halber lediglich eine Leitung 44 mit einem Auslasskanal dargestellt ist. Das Ausführungsbeispiel der Fig. 3 unterscheidet sich des Weiteren von den Fig. 1 und 2 durch die Ausbildung der Kühleinrichtung 26. Die Kühleinrichtung 26 des Ausführungsbeispiels der Fig. 3 umfasst jeweils zwei im Wesentlichen kreisringförmige und konzentrisch um das Gasentnahmerohr 12 angeordnete Kühlkanäle 56, 58. Die Kühlkanäle 56, 58 sind über einen Überströmbereich 60 in dem Sondenkopf 18 miteinander verbunden, sodass Kühlmittel von dem äußeren Kühlkanal 58 in den radial inneren Kühlkanal 56 strömt. Der Überströmbereich 60 umfasst insbesondere eine Mehrzahl von Überströmkanälen, die jeweils von dem radial äußeren Kühlkanal 58 zu dem radial inneren Kühlkanal 56 verlaufen. Die Überströmkanäle sind beispielsweise bogenförmig ausgebildet oder erstrecken sich entlang der äußeren Kontur des Sondenkopfes 18. Die Kühlkanäle 56, 58 sind als Ringräume ausgebildet, wobei der Überströmbereich beispielsweise ebenfalls als Ringraum oder eine Mehrzahl von Überströmkanälen mit einem im Wesentlichen kreisförmigen Querschnitt ausgebildet ist. Insbesondere weist jeder Überströmbereich 60 fünf bis zwanzig, insbesondere zehn, Überströmkanäle auf, die innerhalb des Sondenkopfes 18 um das Gasentnahmerohr 12 angeordnet sind. Eine solche konturnahe Ausbildung der Überströmkanäle der Kühlkanäle 56, 58 bietet den Vorteil eine gleichmäßigen Kühlung der Oberfläche der Gasentnahmesonde 10, insbesondere des Sondenkopfes 18.

Die Leitung 44 ist in dem Ausführungsbeispiel der Fig. 3 zwischen den Kühlkanälen 56, 58 angeordnet. Es ist auch eine Anordnung der Leitung radial außerhalb der Kühlkanale 56, 58 denkbar.

### Bezugszeichenliste

- 10: Gasentnahmesonde
- 12: Gasentnahmerohr
- 14: Gaseinlass
- 16: Gasauslass
- 18: Sondenkopf
- 20: Sondenkörper
- 22: Reaktionsraum
- 24: Gasstrom
- 26: Kühleinrichtung
- 28: Kühlkanal Zulauf
- 30: Kühlkanal Rücklauf
- 32: Kühlmitteleinlass
- 34: Kühlmittelauslass
- 36: Wandung des Reaktionsraums
- 38: Kühlmittelkreis
- 40: Verbindungsbereich
- 42: Ansatzbildung
- 44: Leitung zum Leiten eines Reinigungsmittels
- 46: Leitung zum Leiten eines Reinigungsmittels
- 48: Auslass des Reinigungsmittels
- 50: Auslass des Reinigungsmittels
- 52: Auslasskanal
- 54: Auslasskanal
- 56: Kühlkanal
- 58: Kühlkanal
- 60: Überströmkanal
- 62: Verschleißschutzeinrichtung
- 70: Sensor

## Patentansprüche

1. Gasentnahmesonde (10) zur Entnahme von Gasproben aus einem heißen Reaktionsraum (22) umfassend
einen Gaseinlass (14) zum Einlassen von Gasproben an einem ersten Endbereich der Gasentnahmesonde (10) und einen Gasauslass (16) an einem zweiten Endbereich der Gasentnahmesonde (10) zum Auslassen von Gasproben aus der Gasentnahmesonde (10),
einen den Gaseinlass (14) umfassenden Sondenkopf (18),
einen den Gasauslass (16) umfassenden Sondenkörper (20) und
ein Gasentnahmerohr (12), das sich von dem Gaseinlass (14) zu dem Gasauslass (16) erstreckt,
wobei das Gasentnahmerohr (12) von einer Kühleinrichtung (26) zur Kühlung des Gasentnahmerohrs (12) umgeben ist,
wobei die Gasentnahmesonde (10) zumindest eine Leitung (44, 46) zum Leiten eines Reinigungsmittels aufweist, **dadurch gekennzeichnet, dass** der Sondenkopf (18) zumindest einen zu dem Gaseinlass (14) separaten Auslasskanal (52, 54) zum Auslassen des Reinigungsmittels aus dem Sondenkopf (18) an dem ersten Endbereich der Gasentnahmesonde (10) aufweist und wobei sich der zumindest eine Auslasskanal (52, 54) innerhalb des Sondenkopfes (18) zumindest teilweise radial einwärts in Richtung des Gaseinlasses (14) erstreckt.

2. Gasentnahmesonde (10) nach Anspruch 1, wobei die Leitung (44, 46) zumindest teilweise in dem Sondenkopf (18) angeordnet ist.

3. Gasentnahmesonde (10) nach einem der vorangehenden Ansprüche, wobei sich die Leitung (44, 46) durch den Sondenkörper (20) und den Sondenkopf (18) erstreckt.

4. Gasentnahmesonde (10) nach einem der vorangehenden Ansprüche, wobei die Leitung (44, 46) als Ringraum ausgebildet ist und konzentrisch um das Gasentnahmerohr (12) angeordnet ist.

5. Gasentnahmesonde (10) nach einem der Ansprüche 1 bis 3, wobei eine Mehrzahl von Leitungen (44, 46) in radialer Richtung außerhalb des Gasentnahmerohrs (12) angeordnet sind.

6. Gasentnahmesonde (10) nach einem der vorangehenden Ansprüche, wobei in dem Sondenkopf (12) eine Mehrzahl von Auslasskanälen (52, 54) angeordnet ist, die jeweils mit zumindest einer Leitung (44, 46) in Verbindung stehen.

7. Gasentnahmesonde (10) nach einem der vorangehenden Ansprüche, wobei die Leitung (44, 46) und/ oder der zumindest eine Auslasskanal (52, 54) als Ringraum ausgebildet sind.

8. Gasentnahmesonde (10) nach einem der vorangehenden Ansprüche, wobei der Übergang zwischen der Leitung (44, 46) und dem zumindest einen Auslasskanal (52, 54) kantenfrei, insbesondere stetig ausgebildet ist.

9. Gasentnahmesonde (10) nach einem der vorangehenden Ansprüche, wobei der Sondenkopf (18) mittels eines generativen Fertigungsverfahrens, insbesondere selektives Laserschmelzen oder Elektronenstrahlschmelzen, hergestellt ist.

10. Gasentnahmesonde (10) nach einem der vorangehenden Ansprüche, wobei der Sondenkopf (18) auf seiner Oberfläche eine Verschleißschutzeinrichtung (62), insbesondere aus einem Hartmetall, aufweist.

11. Gasentnahmesonde (10) nach einem der vorangehenden Ansprüche, wobei der Sondenkopf (18) mit dem Sondenkörper (20) verschweißt ist.

12. Gasentnahmesonde (10) nach einem der vorangehenden Ansprüche, wobei die Kühleinrichtung (26) eine Mehrzahl von Kühlkanälen (28, 30; 56, 58) aufweist, die um das Gasentnahmerohr (12) herum angeordnet sind und über einen Überströmbereich in dem Sondenkopf (18) miteinander in Fluidverbindung stehen.

13. Gasentnahmesonde (10) nach Anspruch 13, wobei der Überströmbereich eine Mehrzahl von Überströmkanälen (60) aufweist.

14. Verfahren zum Betreiben einer Gasentnahmesonde (10) gemäß einem der vorangehenden Ansprüche, wobei ein Reinigungsmittel durch die Leitung (44, 46) zum Sondenkopf (18) der Gasentnahmesonde (10) geleitet wird, sodass Ablagerungen an dem Sondenkopf (18) entfernt werden.

## Claims

1. Gas extraction probe (10) for extracting gas samples from a hot reaction chamber (22), comprising a gas inlet (14), for introducing gas samples, at a first end region of the gas extraction probe (10) and a gas outlet (16), for discharging gas samples from the gas extraction probe (10), at a second end region of the gas extraction probe (10),
a probe head (18) which comprises the gas inlet (14),
a probe body (20) which comprises the gas outlet (16), and
a gas extraction tube (12) which extends from the gas inlet (14) to the gas outlet (16),
wherein the gas extraction tube (12) is surrounded by a cooling device (26) for cooling the gas extraction tube (12),
wherein the gas extraction probe (10) comprises at least one line (44, 46) for conducting a cleaning agent, **characterized in that**
the probe head (18) comprises at least one outlet duct (52, 54), which is separate from the gas inlet (14) and serves for discharging the cleaning agent from the probe head (18), at the first end region of the gas extraction probe (10), and wherein the at least one outlet duct (52, 54) extends within the probe head (18) at least partially radially inwards in the direction of the gas inlet (14).

2. Gas extraction probe (10) according to Claim 1, wherein the line (44, 46) is arranged at least partially in the probe head (18).

3. Gas extraction probe (10) according to either of the preceding claims, wherein the line (44, 46) extends through the probe body (20) and the probe head (18).

4. Gas extraction probe (10) according to one of the preceding claims, wherein the line (44, 46) is formed as an annular space and is arranged concentrically around the gas extraction tube (12).

5. Gas extraction probe (10) according to one of Claims 1 to 3, wherein a plurality of lines (44, 46) is arranged outside the gas extraction tube (12) in a radial direction.

6. Gas extraction probe (10) according to one of the preceding claims, wherein a plurality of outlet ducts (52, 54) which are each connected to at least one line (44, 46) is arranged in the probe head (12) .

7. Gas extraction probe (10) according to one of the preceding claims, wherein the line (44, 46) and/or the at least one outlet duct (52, 54) are/is formed as an annular space.

8. Gas extraction probe (10) according to one of the preceding claims, wherein the transition between the line (44, 46) and the at least one outlet duct (52, 54) is of edge-free, in particular stepless, form.

9. Gas extraction probe (10) according to one of the preceding claims, wherein the probe head (18) is produced by means of a generative production process, in particular selective laser melting or electron beam melting.

10. Gas extraction probe (10) according to one of the preceding claims, wherein the probe head (18) comprises on its surface a wear protection device (62), in particular composed of a hard metal.

11. Gas extraction probe (10) according to one of the preceding claims, wherein the probe head (18) is welded to the probe body (20).

12. Gas extraction probe (10) according to one of the preceding claims, wherein the cooling device (26) comprises a plurality of cooling ducts (28, 30; 56, 58), which are arranged around the gas extraction tube (12) and are fluidically connected to one another via a flow transfer region in the probe head (18) .

13. Gas extraction probe (10) according to Claim 13, wherein the flow transfer region comprises a plurality of flow transfer ducts (60).

14. Method for operating a gas extraction probe (10) according to one of the preceding claims, wherein a cleaning agent is conducted through the line (44, 46) to the probe head (18) of the gas extraction probe (10) with the result that deposits on the probe head (18) are removed.

## Revendications

1. Sonde de prélèvement de gaz (10) destinée à prélever des échantillons de gaz dans une chambre de réaction chaude (22), ladite sonde comprenant
une entrée de gaz (14) permettant l'entrée d'échantillons de gaz à une première région d'extrémité de la sonde de prélèvement de gaz (10) et une sortie de gaz (16) à une deuxième région d'extrémité de la sonde de prélèvement de gaz (10) permettant la sortie d'échantillons de gaz de la sonde de prélèvement de gaz (10),
une tête de sonde (18) comprenant l'entrée de gaz (14), un corps de sonde (20) comprenant la sortie de gaz (16) et
un tube de prélèvement de gaz (12) s'étendant de l'entrée de gaz (14) à la sortie de gaz (16),
le tube de prélèvement de gaz (12) étant entouré d'un dispositif de refroidissement (26) destiné à refroidir le tube de prélèvement de gaz (12),
la sonde de prélèvement de gaz (10) comportant au moins une conduite (44, 46) destinée à conduire un agent de nettoyage,
**caractérisée en ce que**
la tête de sonde (18) comporte au moins un canal de sortie (52, 54) séparé de l'entrée de gaz (14) et destiné à évacuer l'agent de nettoyage de la tête de sonde (18) dans la première région d'extrémité de la sonde de prélèvement de gaz (10), et l'au moins un canal de sortie (52, 54) s'étendant au moins partiellement radialement vers l'intérieur en direction de l'entrée de gaz (14) à l'intérieur de la tête de sonde (18).

2. Sonde de prélèvement de gaz (10) selon la revendication 1, la conduite (44, 46) étant au moins partiellement disposée dans la tête de sonde (18).

3. Sonde de prélèvement de gaz (10) selon l'une des revendications précédentes, la conduite (44, 46) s'étendant à travers le corps de sonde (20) et la tête de sonde (18).

4. Sonde de prélèvement de gaz (10) selon l'une des revendications précédentes, la conduite (44, 46) étant conçue comme un espace annulaire et étant disposée concentriquement autour du tube de prélèvement de gaz (12) .

5. Sonde de prélèvement de gaz (10) selon l'une des revendications 1 à 3, une pluralité de conduites (44, 46) étant disposées dans la direction radiale à l'extérieur du tube de prélèvement de gaz (12).

6. Sonde de prélèvement de gaz (10) selon l'une des revendications précédentes, une pluralité de canaux de sortie (52, 54), chacun relié à au moins une conduite (44, 46), étant disposés dans la tête de sonde (12).

7. Sonde de prélèvement de gaz (10) selon l'une des revendications précédentes, la conduite (44, 46) et/ou l'au moins un canal de sortie (52, 54) étant conçus comme un espace annulaire.

8. Sonde de prélèvement de gaz (10) selon l'une des revendications précédentes, la transition entre la conduite (44, 46) et l'au moins un canal de sortie (52, 54) étant sans bord, notamment continue.

9. Sonde de prélèvement de gaz (10) selon l'une des revendications précédentes, la tête de sonde (18) étant réalisée au moyen d'un procédé de fabrication générative, notamment par fusion laser sélective ou par fusion par faisceau d'électrons.

10. Sonde de prélèvement de gaz (10) selon l'une des revendications précédentes, la tête de sonde (18) comportant sur sa surface un dispositif de protection contre l'usure (62), notamment en métal dur.

11. Sonde de prélèvement de gaz (10) selon l'une des revendications précédentes, la tête de sonde (18) étant soudée au corps de sonde (20).

12. Sonde de prélèvement de gaz (10) selon l'une des revendications précédentes, le dispositif de refroidissement (26) comportant une pluralité de canaux de refroidissement (28, 30; 56, 58) qui sont disposés autour du tube de prélèvement de gaz (12) et qui sont en communication fluidique les uns avec les autres dans la tête de sonde (18) par le biais d'une zone de débordement.

13. Sonde de prélèvement de gaz (10) selon la revendication 13, la région de débordement comportant une pluralité de canaux de débordement (60).

14. Procédé de fonctionnement d'une sonde de prélèvement de gaz (10) selon l'une des revendications précédentes, un agent de nettoyage étant guidé à travers la conduite (44, 46) vers la tête de sonde (18) de la sonde de prélèvement de gaz (10) de façon à éliminer des dépôts présents sur la tête de sonde (18).
